# EUROPEAN PATENT APPLICATION

(11) **EP 1 096 210 A2**
(43) Date of publication of application: **02.05.2001**
(21) Application number: 00117926.6
(22) Date of filing: 21.08.2000
(51) Int. Cl.: F25B 43/00, F25B 40/00, B23K 33/00

(54) **Accumulator/receiver and a method of producing the same**

(30) Priority: 27.10.1999 JP 30536599
(71) Applicant: MITSUBISHI DENKI KABUSHIKI KAISHA, Tokyo 100-8310 (JP)
(72) Inventor: Hisamori, Youichi, c/o Mitsubishi Denki K.K., Tokyo 100-8310 (JP); Yosomiya, Masato, c/o Mitsubishi Denki K.K., Tokyo 100-8310 (JP); Saikusa, Tetsuji, c/o Mitsubishi Denki K.K., Tokyo 100-8310 (JP)
(74) Representative: Bohnenberger, Johannes, Dr.

(57) **Abstract**

An accumulator/receiver 20 has: an accumulator space 31 which is connected to a four-way valve and a compressor of a refrigeration cycle via an inflow pipe 24 and an outflow pipe 25; and a receiver space 30 which is connected to a condenser and an evaporator of the refrigeration cycle via an inflow pipe 27 and an outflow pipe 28. The accumulator space 31 is placed in the receiver space 30. An upper end portion of an accumulator vessel 21 is widened to be internally in contact with a receiver vessel 22, and an upper shell 23 to which the inflow pipe 24 and the outflow pipe 25 for an accumulator is connected is joined to an upper end face portion of the accumulator vessel 21.

## Description

### BACKGROUND OF THE INVENTION

The present invention relates to the structure of pressure vessels (an accumulator and a receiver) which are used in a refrigeration cycle apparatus such as an outdoor unit of a package air conditioner (PAC), and also to a method producing the vessels.

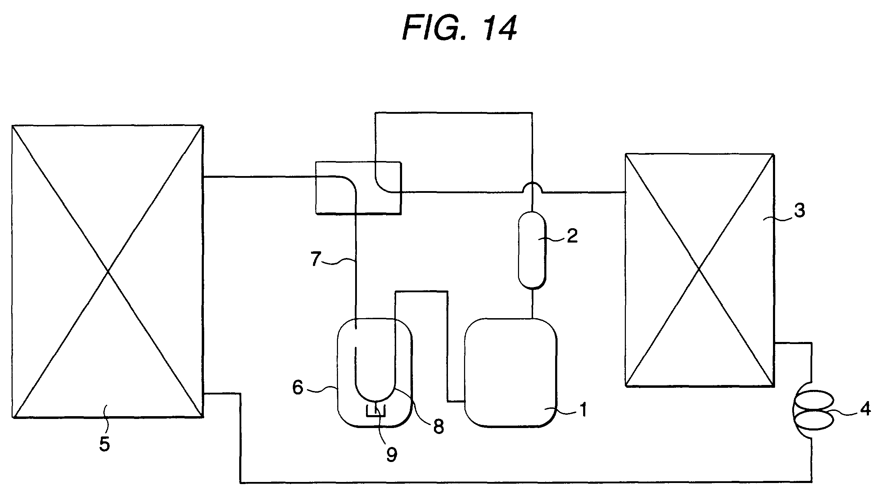

In advance of description of pressure vessels (an accumulator and a receiver) which are used in a refrigeration cycle apparatus, the function of an accumulator in a refrigerant circuit for a refrigeration cycle will be first described. Fig. 14 is a block diagram showing a refrigeration circuit of an outdoor unit of a package air conditioner (PAC). In the figure, 1 denotes a compressor, 2 denotes an oil separator, 3 denotes a condenser, 4 denotes a throttle device, 5 denotes an evaporator, 6 denotes an accumulator, 7 denotes an inflow pipe, 8 denotes a U-like outflow pipe, and 9 denotes an oil return hole which is disposed in a midway of the U-like outflow pipe.

Next, the flows of a refrigerant and oil will be described. A high-temperature and high-pressure gas refrigerant which is ejected from the compressor 1 flows into the oil separator 2, and oil is separated therein from the gas refrigerant. The gas refrigerant is passed through a four-way valve and then flows into the condenser 3. The gas refrigerant is subjected in the condenser to heat exchange with air or water to be condensed and liquefied, and then enters a gaseous state or a low-pressure gas-liquid two-phase state of high dryness. Thereafter, the refrigerant returns to the compressor 1 via the accumulator 6. The oil which is separated in the oil separator 2 returns directly to the compressor 1. The oil which fails to be separated in the oil separator flows together with the liquid refrigerant through the condenser 3, the throttle device 4, and the evaporator 5, and then stays in the accumulator 6, while maintaining the state where the liquid refrigerant and the oil are mixed with each other. The liquid refrigerant and the oil which stay in the accumulator 6 flow into the U-like outflow pipe 8 via the oil return hole 9, and then return to the compressor 1.

The oil and the liquid refrigerant which stay in the accumulator 6 are caused to flow into the U-like outflow pipe 8, by a phenomenon that a pressure difference which is a total of the differential pressure due to the friction loss of the gas refrigerant flowing through the U-like outflow pipe 8, and the pressure produced between the liquid refrigerant level in the accumulator 6 and the oil return hole 9 is generated across the oil return hole 9. In the case where the liquid refrigerant in the sleeping state in a shell of the compressor 1 is activated after the compressor 1 is stopped for a long time period, large amounts of the liquid refrigerant and the oil in the shell of the compressor 1 are ejected, and the liquid refrigerant and the oil are then captured by the oil separator 2, whereby the oil is prevented from largely flowing into the condenser 3.

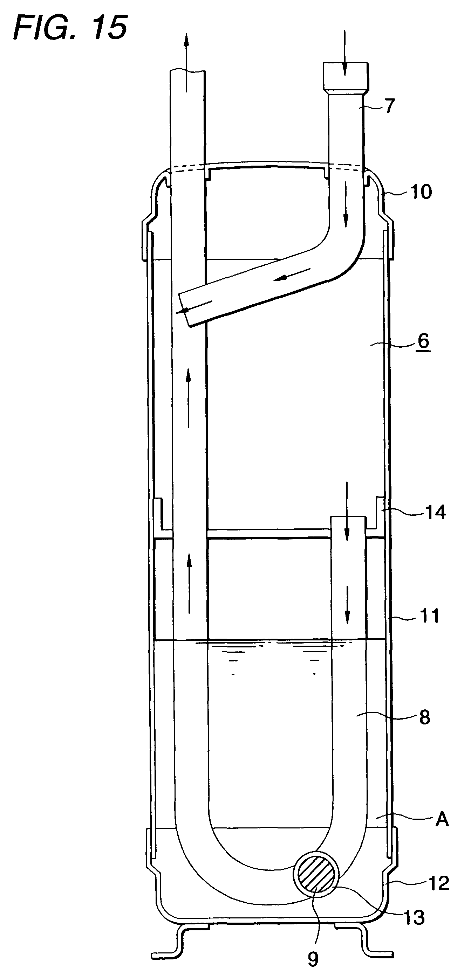

Fig. 15 shows the structure of the accumulator of the conventional art. The reference numeral 6 denotes the body of the accumulator which is a pressure vessel for a low pressure (rating: 13 kgf/cm²). In this example, the accumulator body 6 has a three-piece structure consisting of an upper shell 10, a wound shell 11, and a lower shell 12. The shells are joined together by MIG welding or the like which is performed from the outer peripheral side, so as to maintain the airtightness. The reference numeral 7 denotes the inflow pipe from which the liquid refrigerant in a gaseous state or a gas-liquid two-phase state of high dryness flows, 8 denotes the U-like outflow pipe, and 9 denotes the oil return hole which is disposed in a midway of the U-like outflow pipe 8 (in the figure, the hole hides behind a strainer 13 and hence does not appear). The reference numeral 14 denotes a baffle plate which is formed by a punching metal plate, and which is used for preventing vibration of the U-like outflow pipe 8 due to vibration of liquid refrigerant from occurring.

The operations of the refrigerant and the lubricating oil in the accumulator will be described. The refrigerant in a gaseous state or a gas-liquid two-phase state of high dryness, and the lubricating oil flow into from the inflow pipe 7. The refrigerant in a gas-liquid two-phase state bumps against the wound shell 11 of the accumulator. The gas-phase refrigerant (gas refrigerant) stays in the upper portion of the accumulator, and the lubricating oil and the liquid-phase refrigerant (liquid refrigerant) stay in the bottom section of the vessel. The gas refrigerant is sucked into the U-like outflow pipe 8 and then flows out to the compressor 1 (not shown in the figure). As described above, the liquid refrigerant containing a large amount of the lubricating oil is sucked in a small amount into the oil return hole 9 which is formed in the bent portion of the U-like outflow pipe 8, and then flows out to the compressor 1 together with the gas refrigerant which flows in the U-like outflow pipe 8.

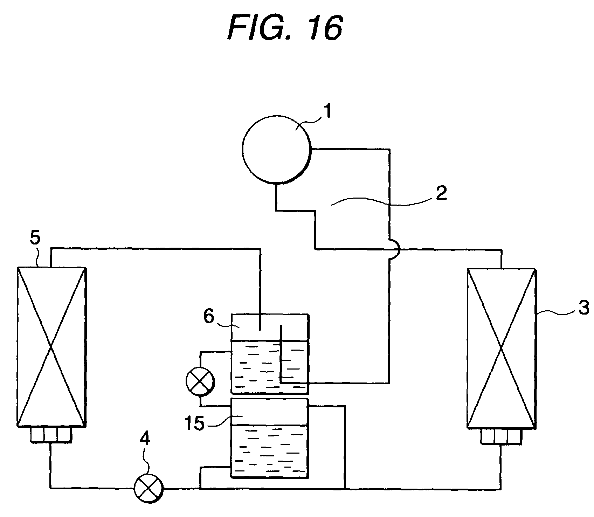

Another example of the conventional art is shown in Fig. 16. Fig. 16 is a block diagram of a refrigeration cycle of the conventional art. The refrigeration cycle is configured so that a receiver 15 which stores a high-pressure liquid refrigerant is disposed between an outdoor heat exchanger serving as the condenser 3, and an indoor heat exchanger serving as the evaporator 5. In the refrigeration cycle of an air conditioner of the conventional art, high-temperature and high-pressure gas refrigerant is ejected from the compressor 1 and then enters the outdoor heat exchanger serving as the condenser 3. The gas refrigerant is subjected in the condenser 3 to heat exchange with the outside air to become a high-temperature gas-liquid two-phase refrigerant, and then enters the receiver 15. Therefore, the refrigerant flows out from the receiver 15 and then enters the throttle device 4. The high-temperature and high-pressure refrigerant which flows out from the receiver 15 is pressure-reduced by the throttle device 4, and then sent as a two-phase refrigerant of low dryness into the indoor heat exchanger serving as the evaporator 5. The refrigerant is subjected in the evaporator 5 to heat exchange with the air in the room to be evaporated to be formed as a gas-liquid two-phase refrigerant of high dryness. The refrigerant then enters the accumulator 6, and is again sucked into the compressor 1. At this time, an excess refrigerant is stored into the receiver 15 and the accumulator 6.

In the refrigeration cycle of the conventional art shown in Fig. 14, for example, a non-azeotropic mixed refrigerant in which 52 wt.% of (flon) R134a, 25 wt.% of R125, and 23 wt.% of R32 are mixed is used as a refrigerant. In this case, R32 and R125 which are low boiling refrigerants are higher in composition in the excess refrigerant stored in the accumulator 6. When the amount of the excess refrigerant stored in the accumulator 6 is changed, therefore, also the composition of the circulating refrigerant is changed, thereby causing the physical properties of the circulating refrigerant to be varied, and also the operating pressure and the capacity to be changed.

It has been known that, because of the nonazeotropy of a mixed refrigerant, the heat transfer efficiency of piping for a heat exchanger is lowered as compared with a case where a single refrigerant such as R22 is used. This causes another problem in that the COP (coefficient of performance) of the refrigeration cycle is lowered.

In the refrigeration cycle shown in Fig. 16, the receiver 15 is disposed so that the excess refrigerant is stored also in the receiver 15. However, this refrigeration cycle requires two pressure vessels, i.e., the receiver 15 and the accumulator 6, and hence occupies a larger space than a refrigeration cycle having only the accumulator 6, thereby producing a problem in that the outdoor unit is bulky.

### SUMMARY OF THE INVENTION

The invention has been conducted in order to solve these problems. It is an object of the invention to provide a pressure vessel which, even when a non-azeotropic mixed refrigerant is used, can suppress composition variation of a circulating refrigerant due to an excess refrigerant, which can improve the COP of a refrigeration cycle, which can reduce the installation space of the accumulator 6 and the receiver 15, and which is small in size and inexpensive.

The pressure vessel for a refrigeration cycle (accumulator/receiver) according to a first configuration of the invention is an accumulator/receiver comprising: an accumulator space in which one end is to be connected to a four-way valve of a refrigeration cycle via first piping and another end is to be connected to a compressor of the refrigeration cycle via the first piping; and a receiver space in which one end is to be connected to a condenser of the refrigeration cycle via a second piping and another end is to be connected to an evaporator of the refrigeration cycle via the second piping, the accumulator space being placed in the receiver space, wherein an upper end portion of an accumulator vessel constituting the accumulator space is widened to be internally in contact with a receiver vessel constituting the receiver space, and an end plate to which the first piping for an accumulator is connected is joined to an upper end face portion of the accumulator vessel.

In the pressure vessel for a refrigeration cycle (accumulator/receiver) according to a second configuration of the invention, fins are disposed on an outer peripheral wall of the accumulator vessel which is placed in the receiver space.

In the pressure vessel for a refrigeration cycle (accumulator/receiver) according to a third configuration of the invention, a hole through which the receiver space and the accumulator space communicate with each other is formed in a side face portion of the accumulator vessel which is placed in the receiver space.

In the pressure vessel for a refrigeration cycle (accumulator/receiver) according to a fourth configuration of the invention, the second piping is passed through the accumulator vessel and the end plate, and is connected into the receiver space.

In the pressure vessel for a refrigeration cycle (accumulator/receiver) according to a fifth configuration of the invention, in a portion where the second piping is passed through the accumulator vessel, a predetermined gap is formed between the second piping and the accumulator vessel.

In the pressure vessel for a refrigeration cycle (accumulator/receiver) according to a sixth configuration of the invention, in portions where the second piping is passed through the accumulator vessel and the end plate, the second piping is hermetically joined to the accumulator vessel and the end plate.

In the pressure vessel for a refrigeration cycle (accumulator/receiver) according to a seventh configuration of the invention, ends of the second piping connected into the receiver space have an L-like or V-like shape, and are disposed so as not to be opposed to each other.

In the pressure vessel for a refrigeration cycle (accumulator/receiver) according to an eighth configuration of the invention, ends of the second piping are inserted into the receiver space, and the ends have an L-like or V-like shape, and are disposed so as not to be opposed to each other.

The pressure vessel for a refrigeration cycle (accumulator/receiver) according to a ninth configuration of the invention is an accumulator/receiver comprising: an accumulator space in which one end is to be connected to a four-way valve of a refrigeration cycle via first piping and another end is to be connected to a compressor of the refrigeration cycle via the first piping; and a receiver space in which one end is to be connected to a condenser of the refrigeration cycle via a second piping and another end is to be connected to an evaporator of the refrigeration cycle via the second piping, the receiver space and the accumulator space being separated from each other by a baffle plate, wherein the baffle plate is fitted to an upper end portion of a receiver vessel constituting the receiver space, and an lower end portion of an accumulator vessel constituting the accumulator space is internally in contact with an outer periphery of the baffle plate.

In the method of producing of a pressure vessel for a refrigeration cycle (accumulator/receiver) according to the invention, an accumulator vessel constituting an accumulator space in which one end is to be connected to a four-way valve of a refrigeration cycle via first piping and another end is to be connected to a compressor of the refrigeration cycle via the first piping is placed in a receiver vessel constituting a receiver space in which one end is to be connected to a condenser of the refrigeration cycle via a second piping and another end is to be connected to an evaporator of the refrigeration cycle via the second piping, an upper end portion of the accumulator vessel is widened to be internally in contact with the receiver vessel, an end plate to which the first piping for an accumulator is connected is fitted to an outer peripheral portion of an upper end face portion of the accumulator vessel, and three plates, i.e., the accumulator vessel, the receiver vessel, and the end plate are hermetically joined to one another.

### BRIEF DESCRIPTION OF THE DRAWINGS

Fig. 1 is a view showing the sectional configuration of an accumulator/receiver of Embodiment 1 of the invention.
Fig. 2 is a block diagram showing a refrigeration cycle of an air conditioner in Embodiment 1 of the invention.
Fig. 3 is a Mollier chart illustrating the cooling operation of the air conditioner in Embodiment 1 of the invention.
Fig. 4 is a diagram illustrating a change of the composition of an excess refrigerant in the air conditioner in Embodiment 1 of the invention.
Figs. 5A to 5C are views showing the sectional configuration of an accumulator/receiver of Embodiment 2 of the invention.
Fig. 6 is a view showing the sectional configuration of an accumulator/receiver of Embodiment 3 of the invention.
Fig. 7 is a view showing the sectional configuration of an accumulator/receiver of Embodiment 4 of the invention.
Fig. 8 is a view showing the sectional configuration of an accumulator/receiver of Embodiment 5 of the invention.
Fig. 9 is a view showing the sectional configuration of an accumulator/receiver of Embodiment 6 of the invention.
Fig. 10 is a view showing the sectional configuration of an accumulator/receiver of Embodiment 7 of the invention.
Fig. 11 is a view showing the sectional configuration of an accumulator/receiver of Embodiment 8 of the invention.
Fig. 12 is a view showing the sectional configuration of an accumulator/receiver of Embodiment 9 of the invention.
Fig. 13 is a view showing the sectional configuration of another accumulator/receiver of Embodiment 9 of the invention.
Fig. 14 is a block diagram showing a refrigeration cycle of an air conditioner of the conventional art.
Fig. 15 is a view showing the sectional configuration of an accumulator of the conventional art.
Fig. 16 is a block diagram showing a refrigeration cycle of another air conditioner of the conventional art.

### DETAILED DESCRIPTION OF THE PREFERRED EMBODIMENTS

### (Embodiment 1)

Hereinafter, Embodiment 1 of the invention will be described with reference to the figures.

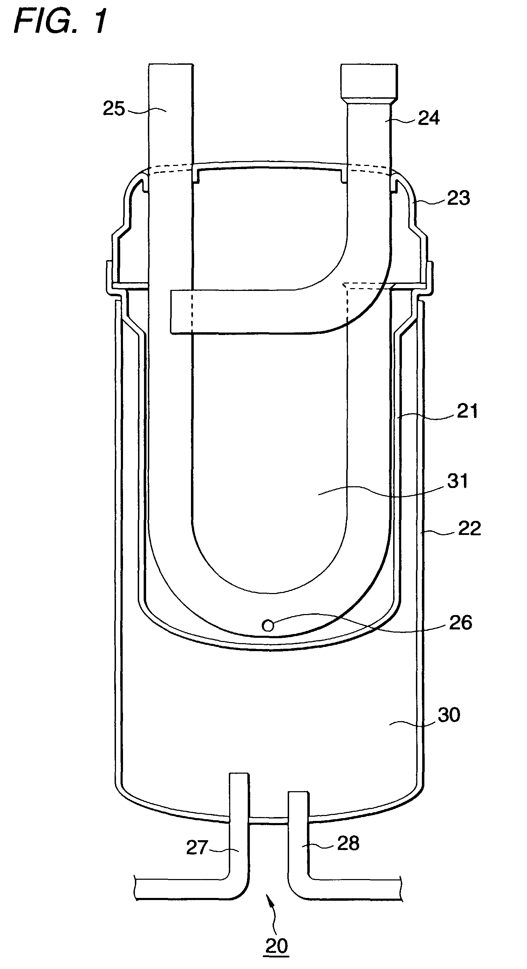

Fig. 1 is a view showing the sectional configuration of a pressure vessel used in the refrigeration cycle of an air conditioner which is Embodiment 1 of the invention, and shows the structure of the pressure vessel in which an accumulator and a receiver are integrated with each other (hereinafter, such a pressure vessel is referred to as accumulator/receiver). In the figure, 20 denotes the accumulator/receiver in which an accumulator and a receiver are integrated with each other, and which has a structure wherein the accumulator is placed in the receiver. The reference numeral 21 denotes an accumulator vessel which constitutes an accumulator unit, and which is a pressure vessel that receives an internal pressure (rating: 13 kgf/cm²) and an external pressure (rating: 30 kgf/cm²). An upper end portion of the accumulator vessel 21 is widened so as to be internally in contact with the inner periphery of a receiver vessel 22 constituting a receiver unit. An upper shell (end plate) 23 is fitted into the widened portion. An inflow pipe (first piping) 24 and a U-like outflow pipe (first piping) 25 to the accumulator unit are hermetically joined to the upper shell by brazing. The accumulator vessel 21 and the receiver vessel 22, and the accumulator vessel and the upper shell 23 are joined together by MIG welding or the like which is performed from the outer peripheral side, so as to maintain the airtightness. The reference numeral 26 denotes an oil return hole which is disposed in a midway of the U-like outflow pipe 25, and 27 and 28 denote an inflow pipe (second piping) and an outflow pipe (second piping) to the receiver unit, respectively. These pipes are hermetically joined to the receiver vessel 22 by brazing. The reference numeral 30 denotes a receiver space, and 31 denotes an accumulator space.

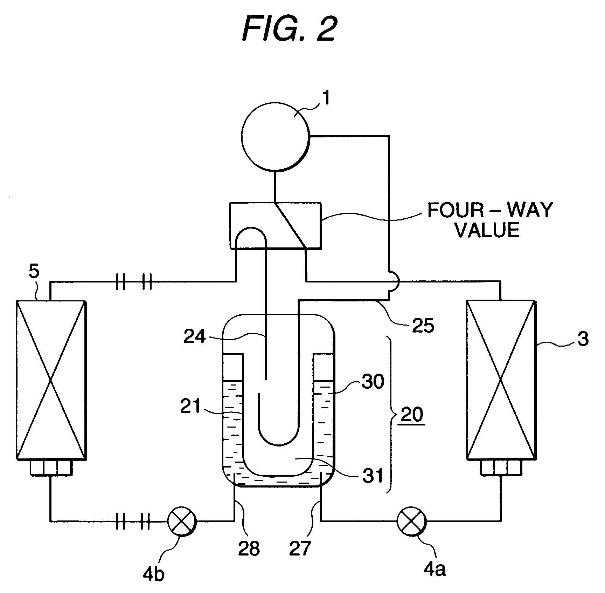

Next, the function of the accumulator/receiver 20 will be described with reference to a block diagram of Fig. 2 showing the refrigeration cycle of the air conditioner. The refrigeration cycle of Fig. 2 shows the state in a cooling operation. In Fig. 2, 1 denotes a compressor, 3 denotes a condenser (outdoor heat exchanger), 4a denotes a first throttle device attached to piping through which the condenser (outdoor heat exchanger) 3 and the inflow pipe 27 for the receiver unit are connected to each other, and 4b denotes a second throttle device attached to piping through which the outflow pipe 28 for the receiver unit and an evaporator (indoor heat exchanger) 5 are connected to each other. The inflow pipe 24 which is hermetically brazed to the upper shell of the accumulator unit is connected to a four-way valve via piping, and the outflow pipe 25 which is hermetically brazed to the upper shell of the accumulator unit is connected to the suction side of the compressor 1 via piping. A non-azeotropic mixed refrigerant composed of two or more kinds of refrigerants of different boiling points is used in the refrigeration cycle.

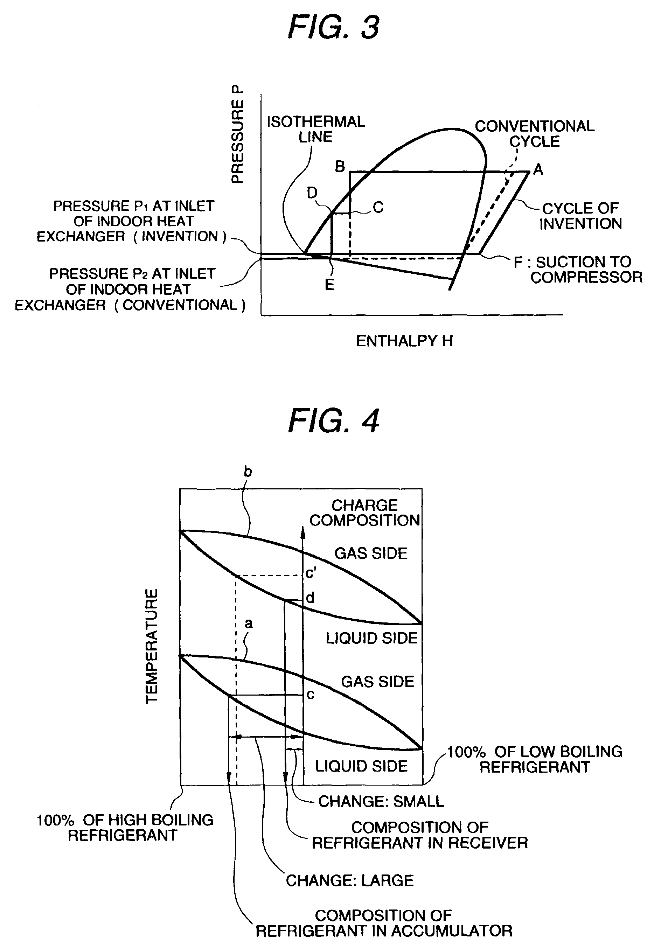

Next, the operation of the thus configured refrigeration cycle in a cooling operation will be described with reference to Fig. 3. Fig. 3 is a Mollier chart for a cooling operation. In the chart, the solid line indicates the refrigeration cycle of the embodiment, and the broken line indicates a refrigeration cycle of the conventional art.

A high-temperature and high-pressure gas refrigerant is ejected from the compressor 1 and then enters the condenser (outdoor heat exchanger) 3 via the four-way valve (A in Fig. 3). The gas refrigerant is subjected in the condenser 3 to heat exchange with the outside air to become a liquid refrigerant, and then enters the first throttle device 4a (B in Fig. 3). The refrigerant which has entered the first throttle device 4a is reduced in pressure to the point indicated by C in Fig. 3 to become a high-temperature two-phase refrigerant of dryness of 0.1 or less, and then enters the receiver space 30 via the inflow pipe 27. The high-temperature two-phase refrigerant of low dryness which has entered the receiver space 30 is cooled to the saturated liquid state via the wall of the accumulator vessel 21 which is in contact with the receiver space 30, by the low-temperature and low-pressure refrigerant flowing in the accumulator space 31, and then flows out from the receiver space 30 via the outflow pipe 28 (D in Fig. 3).

As a result of this cooling, the inlet enthalpy of the evaporator (indoor heat exchanger) 5 is reduced, and hence the enthalpy difference between the inlet and the outlet of the evaporator 5 which is so-called refrigerating effect is increased. Because of the temperature glide in a two-phase region which is known as characteristics of a non-azeotropic mixed refrigerant, as the inlet enthalpy of the evaporator 5 is smaller, the inlet pressure of the evaporator 5 in the case where the equivalent evaporating temperature is to be maintained can be made higher. For example, results of experiments on this evaporator show that, as compared with the above-described refrigeration cycle circuit, the enthalpy difference between the inlet and the outlet of the evaporator 5 is increased by 2%, and the pressure P₁ at the inlet (E in Fig. 3) of the evaporator 5 is higher by 9.8 kPa than a pressure P₂ in the conventional art.

The saturated liquid refrigerant which flows out from the receiver space 30 is formed as a low-temperature and low-pressure two-phase refrigerant of dryness of 0.2 to 0.3, by the second throttle device 4b, and then enters the evaporator 5 (E in Fig. 3) . The low-temperature and low-pressure two-phase refrigerant is subjected in the evaporator 5 to heat exchange with the air in the room to be evaporated to be formed as a low-temperature and low-pressure two-phase refrigerant of dryness of 0.9 to 1.0, and then enters the accumulator space 31 of the accumulator/receiver 20 via the four-way valve and the inflow pipe 24. The low-temperature and low-pressure two-phase refrigerant of high dryness which has entered the accumulator space 31 is subjected to heat exchange with the high-temperature and high-pressure two-phase refrigerant flowing through the receiver space 30 to become a low-pressure gas refrigerant, and then sucked into the compressor 1 (F in Fig. 3). In the embodiment, the accumulator space 31 is placed in the receiver space 30. Even when an excess refrigerant which is produced during the refrigerant circulation tries to stay in the accumulator space 31, therefore, the refrigerant is gasified by the heat exchange with the high-temperature receiver space, and hence the excess refrigerant does not stay in the accumulator space 31. Namely, the excess refrigerant which is produced during the refrigerant circulation is stored as a saturated liquid refrigerant into the receiver space 30.

Next, a change of the composition of the excess refrigerant will be described with reference to Fig. 4. Fig. 4 is a comparative diagram of a change of the composition of the circulating refrigerant in the cases where the non-azeotropic mixed refrigerant is stored into the receiver space 30 or the accumulator space 31. In Fig. 4, the curve a shows the composition conversion in the case where an excess non-azeotropic mixed refrigerant is stored into an accumulator (low temperature and low pressure), and the curve b shows the composition conversion in the case where an excess non-azeotropic mixed refrigerant is stored into a receiver (high temperature and high pressure). From Fig. 4, it is seen that, when an excess non-azeotropic mixed refrigerant is stored into the accumulator 6 in the refrigeration cycle of the conventional configuration shown in Fig. 14, the composition of the liquid refrigerant in the accumulator, for example, a gas-liquid two-phase refrigerant at point c is largely changed as indicated by "A." By contrast, in the embodiment, for example, the gas-liquid two-phase refrigerant at point c' is subjected to heat exchange in the receiver space 30 with the accumulator to be lowered in temperature, and hence moved from point c' to point d, with the result that the composition of the liquid refrigerant stored in the receiver space 30 is changed in a smaller degree with respect to the charge composition, as indicated by "B."

In the accumulator space 31, even when an excess refrigerant tries to stay in the accumulator space 31, the refrigerant is gasified as a result of the heat exchange with the high-temperature receiver space 30, and hence the excess refrigerant does not stay in the accumulator space 31.

As described above, in the accumulator/receiver of Embodiment 1, since the accumulator space 31 is placed in the receiver space 30, an excess refrigerant does not stay in the accumulator space 31, but stay in the receiver space 30 which is high in temperature and pressure, and the composition change of the circulating refrigerant in the receiver space 30 can be suppressed to a small degree. Therefore, the embodiment can attain an effect that the operating pressure and the performance can be prevented from being varied.

Since the high-temperature two-phase refrigerant of low dryness which has entered the receiver space 30 can be cooled to the saturated liquid state by the low-temperature and low-pressure refrigerant in the accumulator space 31, the enthalpy difference between the inlet and the outlet of the indoor heat exchanger is increased, and the inlet pressure of the indoor heat exchanger is raised. As a result, the embodiment can attain an effect that the COP of the refrigeration cycle is improved.

As shown in Fig. 1, the end face of the accumulator vessel 21 is widened so as to be internally in contact with the receiver vessel 22, and the accumulator vessel 21 is projected into the receiver space. Therefore, the surface area through which heat exchange is performed can be made larger, and configured by the three vessels, whereby the production cost can be reduced. Since the vessel is configured by only the accumulator/receiver 20, the installation space can be made smaller.

Even when a conventional refrigerant (flon R22) is used in place of the non-azeotropic mixed refrigerant, an excess refrigerant is prevented from staying in the accumulator space 31, and the refrigerant is sucked into the compressor 1 after it is completely gasified, resulting in that the efficiency of the refrigeration cycle is enhanced.

In the embodiment, the ends of the inflow pipe 27 and the outflow pipe 28 are inserted into the receiver space 30 so that the pipes are projected therein. Alternatively, the ends of the inflow pipe 27 and the outflow pipe 28 may not be inserted into the receiver space 30, and the pipes may be merely connected to the receiver vessel 22.

### (Embodiment 2)

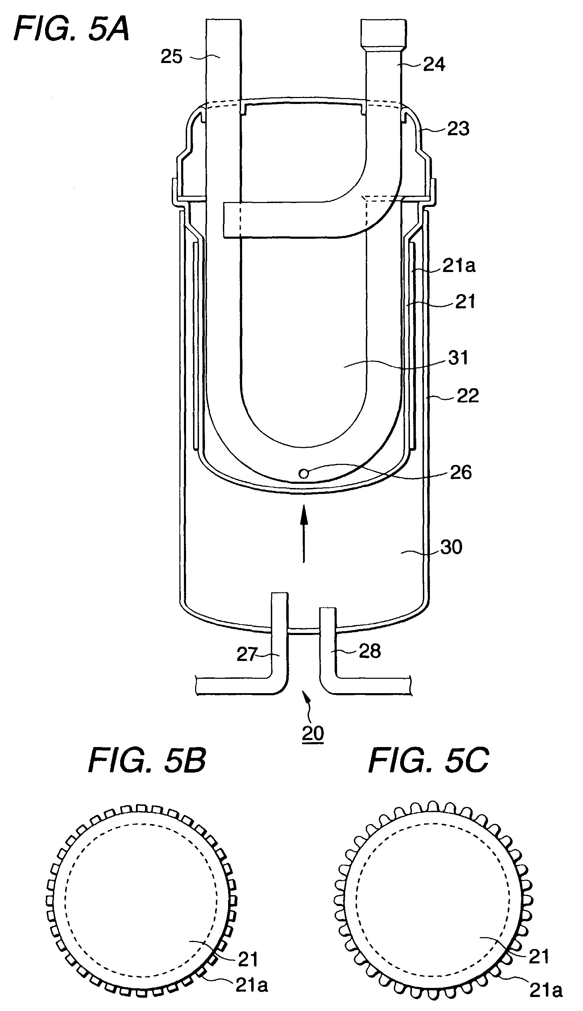

Fig. 5A is a view showing the sectional configuration of an accumulator/receiver which is Embodiment 2 of the invention, and Figs. 5B and 5C are views of an accumulator unit as seen in the direction of the arrow in Fig. 5A. Fins 21a are disposed on the outer peripheral wall of the accumulator vessel 21 of the accumulator/receiver of Fig. 1. The disposition of the fins 21a enables the area through which heat exchange is performed between the accumulator unit and the receiver unit, to be further increased.

The fins 21a may be configured in the following manner. As shown in Fig. 5B, plates of a high thermal conductivity material such as copper or aluminum may be attached by soldering to the outer peripheral face of the accumulator vessel 21. As shown in Fig. 5C, a corrugated plate may be attached by soldering to the outer peripheral face of the accumulator vessel 21. Alternatively, convex and concave portions may be formed in the surface during a process of shaping the accumulator vessel 21 by drawing or the like, and the convex and concave portions may be used as the fins 21a.

### (Embodiment 3)

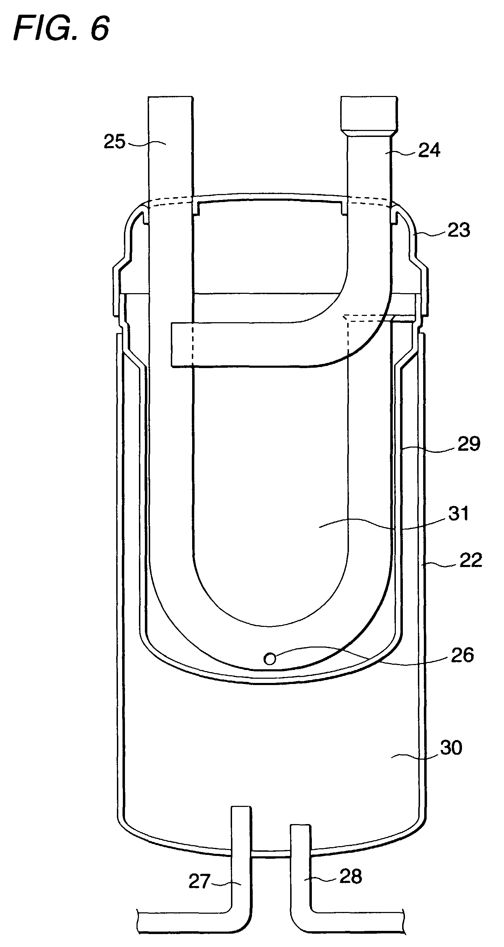

In Embodiment 1, the upper shell 23 is fitted to the accumulator vessel 21 so that the outer periphery of the upper shell is internally in contact with the widened portion of the vessel. Alternatively, as shown in Fig. 6, the inner periphery of the upper shell 23 may be internally in contact with the widened portion of an accumulator vessel 29.

### (Embodiment 4)

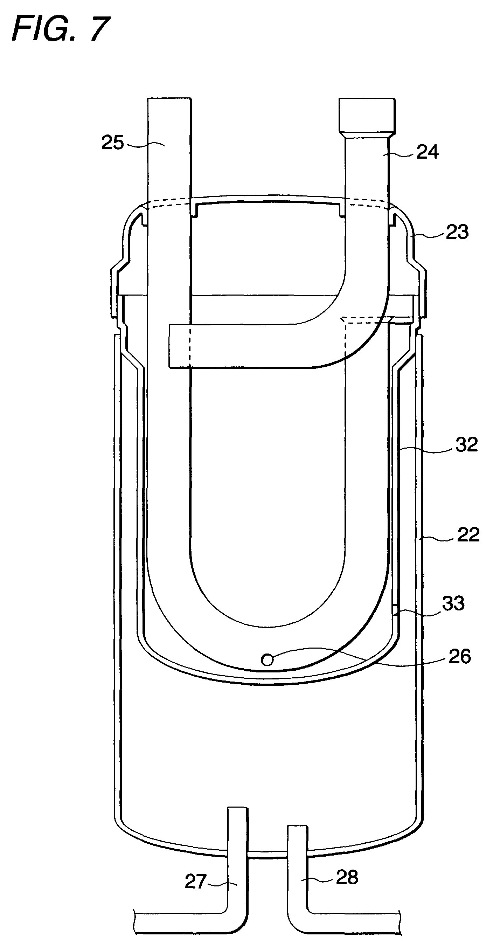

Fig. 7 is a view showing the sectional configuration of an accumulator/receiver which is Embodiment 4 of the invention. The appearance of the embodiment is identical with that of Embodiment 1. In the embodiment, an accumulator vessel 32 is configured in a different manner, or a hole 33 which is opened in the receiver space is formed in the side face of the accumulator vessel 32.

When the operation of the refrigeration cycle is stopped, an excess refrigerant in the piping is returned to the accumulator unit. When the refrigerant stays in the accumulator vessel 32 and the cycle is again actuated, the staying refrigerant is suddenly returned from the oil return hole 26 disposed in a midway of the U-like outflow pipe 25, to the compressor 1, thereby causing a liquid compressing phenomenon which is called liquid back. This may break the compressor 1. In the embodiment, the hole 33 is formed in the side face of the accumulator vessel 32 so that the excess refrigerant does not stagnate at a level higher than the hole 33, thereby preventing the compressor 1 from being broken by liquid back. A gas refrigerant staying in the receiver unit may be allowed to directly pass through the hole 33 so as to flow into the accumulator unit, thereby attaining an effect that the heat exchange through the surface of the accumulator vessel 32 is performed at a higher efficiency.

The size of the hole 33 must be made small so that the pressures of the accumulator unit and the receiver unit are not uniformalized. For example, the hole may have a diameter of about 0.1 mm.

### (Embodiment 5)

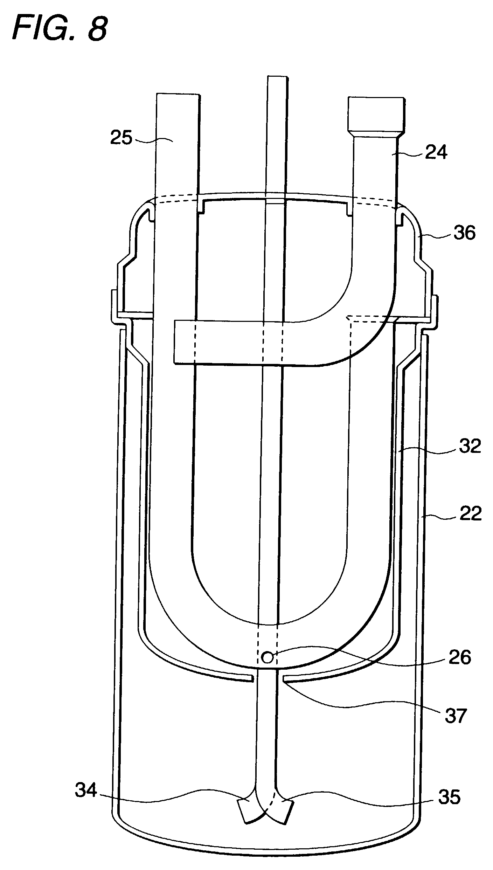

Fig. 8 is a view showing the sectional configuration of an accumulator/receiver which is Embodiment 5 of the invention. In the figure, 32 denotes an accumulator vessel constituting an accumulator unit. An upper end portion of the accumulator vessel 32 is widened so as to be internally in contact with the inner periphery of the receiver vessel 22 constituting a receiver unit. An upper shell 36 to which the inflow pipe 24 and the U-like outflow pipe 25 to the accumulator unit are hermetically joined by brazing is fitted into the widened portion. An inflow pipe 34 to the receiver unit is passed through the upper shell 36 and the accumulator vessel 32, and elongates to a position where the pipe reaches the bottom section of the receiver unit. The upper shell 36 and the inflow pipe 34 are hermetically joined to each other. An outflow pipe 35 from the receiver unit elongates from the bottom section of the receiver unit and is passed through the accumulator vessel 32 and the upper shell 36. The upper shell 36 and the outflow pipe 35 are hermetically joined to each other. In portions of the accumulator vessel 32 where the inflow pipe 34 and the outflow pipe 35 for the receiver unit are passed through, a gap 37 is formed between the accumulator vessel 32, and the inflow pipe 34 and the outflow pipe 35. In order to prevent the pressures of the accumulator unit and the receiver unit from being uniformalized, the equivalent diameter of the gap 37 may be set to, for example, about 0.1 mm.

As described above, in the embodiment, since the inflow pipe 34 and the outflow pipe 35 for the receiver unit are passed through the accumulator space 31 the temperature of which is lower, the liquid refrigerant flowing out from the outflow pipe 35 is subcooled and hence the efficiency of the refrigeration cycle can be further enhanced.

Since the gap 37 is formed in each of the portions which are disposed in the accumulator vessel 32 and through which the inflow pipe 34 and the outflow pipe 35 for the receiver unit are respectively passed, an excess refrigerant does not stay in the accumulator unit. Therefore, it is possible to prevent the compressor 1 from being broken by liquid back which may occur when the operation of the compressor is restarted.

A gas refrigerant staying in the receiver unit may be allowed to directly pass through the gap 37 so as to flow into the accumulator unit, thereby attaining an effect that the heat exchange through the surface of the accumulator vessel 32 is performed at a higher efficiency.

### (Embodiment 6)

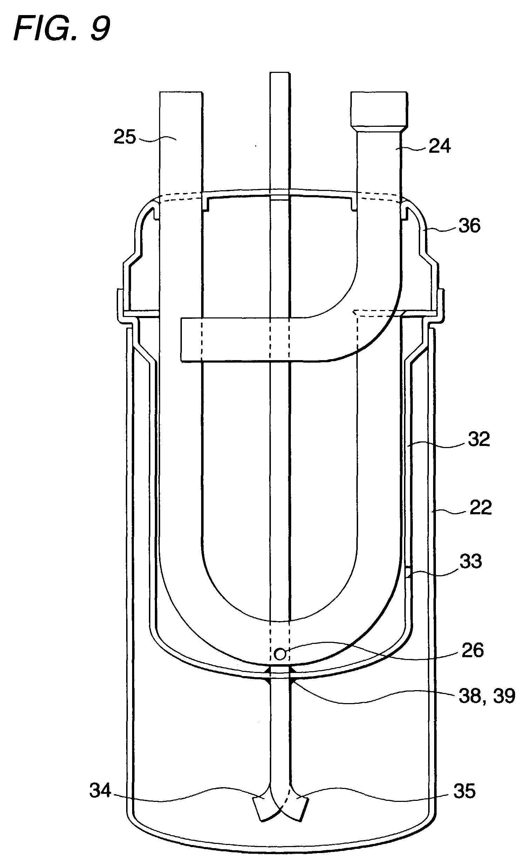

Fig. 9 is a view showing the sectional configuration of an accumulator/receiver which is Embodiment 6 of the invention. In the figure, 32 denotes an accumulator vessel constituting an accumulator unit. An upper end portion of the accumulator vessel 32 is widened so as to be internally in contact with the inner periphery of a receiver vessel 22 constituting a receiver unit. An upper shell 36 to which an inflow pipe 24 and a U-like outflow pipe 25 to the accumulator unit are hermetically joined by brazing is fitted into the widened portion. An inflow pipe 34 to the receiver unit is passed through the upper shell 36 and the accumulator vessel 32, and elongates to a position where the pipe reaches the bottom section of the receiver unit. The upper shell 36 and the inflow pipe 34, and the accumulator vessel 32 and the inflow pipe 34 are hermetically joined to each other. The outflow pipe 35 from the receiver unit elongates from the bottom section of the receiver unit to be passed through the accumulator vessel 32 and the upper shell 36. The upper shell 36 and the outflow pipe 35, and the accumulator vessel 32 and the outflow pipe 35 are hermetically joined to each other. The reference numeral 38 denotes a hermetic joining portion between the accumulator vessel 32 and the inflow pipe 34, and 39 denotes a hermetic joining portion between the accumulator vessel 32 and the outflow pipe 35. The reference numeral 33 denotes a hole which is formed in the side face of the accumulator vessel 32 so as to be opened in the receiver space. The hole is configured in the same manner as that described in Embodiment 4.

As described above, in the embodiment, since the inflow pipe 34 and the outflow pipe 35 for the receiver unit are passed through the accumulator space 31 the temperature of which is lower, the liquid refrigerant flowing out from the outflow pipe 35 is subcooled and hence the efficiency of the refrigeration cycle can be further enhanced.

In the portions of the accumulator vessel 32 where the inflow pipe 34 and the outflow pipe 35 are passed through, the inflow pipe 34 and the outflow pipe 35, and the accumulator vessel 32 are hermetically joined with each other by brazing or the like. Even when the liquid surface in the receiver unit is waved, therefore, a phenomenon that the inflow pipe 34 and the outflow pipe 35 which are long are resonantly vibrated to cause fatigue failure of the piping can be prevented from occurring.

Since the hole 33 is formed so that an excess refrigerant does not stay in the accumulator unit, it is possible to prevent the compressor 1 from being broken by liquid back which may occur when the operation of the compressor is restarted. A gas refrigerant staying in the receiver unit is allowed to directly pass through the hole 33 so as to flow into the accumulator unit, thereby attaining an effect that the heat exchange through the surface of the accumulator vessel 32 is performed at a higher efficiency.

### (Embodiment 7)

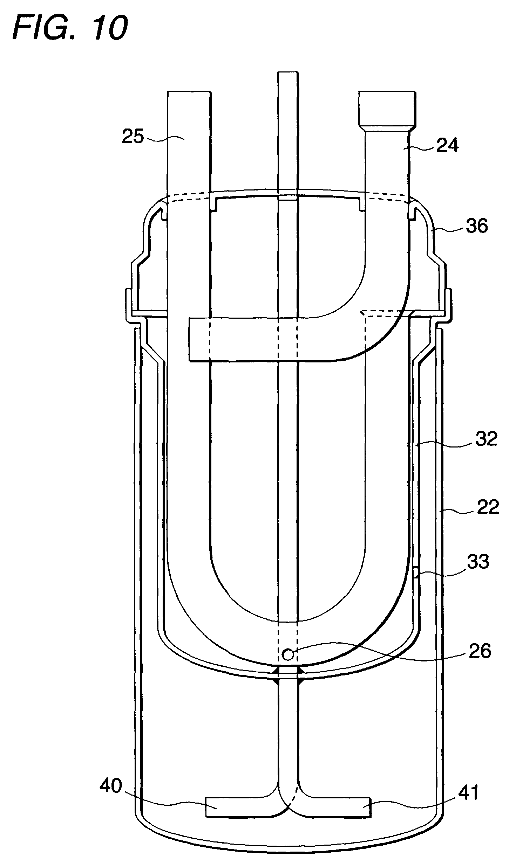

Fig. 10 is a view showing the sectional configuration of an accumulator/receiver which is Embodiment 7 of the invention. In the figure, 32 denotes an accumulator vessel constituting an accumulator unit. An upper end portion of the accumulator vessel 32 is widened so as to be internally in contact with the inner periphery of a receiver vessel 22 constituting a receiver unit. An upper shell 36 to which an inflow pipe 24 and a U-like outflow pipe 25 to the accumulator unit are hermetically joined by brazing is fitted into the widened portion. The reference numeral 33 denotes a hole which is formed in the side face of the accumulator vessel 32 so as to be opened in the receiver space. An inflow pipe 40 to the receiver unit is passed through the upper shell 36 and the accumulator vessel 32, and elongates to a position where the pipe reaches the bottom section of the receiver unit. The upper shell 36 and the inflow pipe 40, and the accumulator vessel 32 and the inflow pipe 40 are hermetically joined to each other. An outflow pipe 41 from the receiver unit elongates from the bottom section of the receiver unit to be passed through the accumulator vessel 32 and the upper shell 36. The upper shell 36 and the outflow pipe 41, and the accumulator vessel 32 and the outflow pipe 41 are hermetically joined to each other. In the embodiment, the ends (the portions in the bottom section of the receiver unit) of the inflow pipe 40 and the outflow pipe 41 for the receiver unit are bent into an L-like or V-like shape, and the outlet and the inlet are directed in opposite directions, respectively.

As described above, in the embodiment, the ends (the portions in the bottom section of the receiver unit) of the inflow pipe 40 and the outflow pipe 41 for the receiver unit are bent into an L-like or V-like shape, thereby increasing the distance between the inlet of the outflow pipe 41 and the outlet of the inflow pipe 40, and the outlet and the inlet are directed in opposite directions. Therefore, the refrigerant of the gas phase component which flows out in a two-phase state from the inflow pipe 40 for the receiver unit is prevented from being directly sucked out through the outflow pipe 41 for the receiver unit, so that the gas and the liquid are surely distributed in the receiver unit, whereby the efficiency of the air conditioner can be enhanced.

In the embodiment described above, the accumulator vessel 32, and the inflow pipe 40 and the outflow pipe 41 are hermetically joined to each other. Alternatively, a structure may be employed in which, as shown in Embodiment 5, the gap 37 is formed in the portions which are disposed in the accumulator vessel 32 and through which the inflow pipe 40 and the outflow pipe 41 for the receiver unit are respectively passed, and the hole 33 in the side face of the accumulator vessel 32 is eliminated. Also the alternative can attain the same effects.

Also in the configuration such as that of Embodiment 1 in which the inflow pipe 27 and the outflow pipe 28 for the receiver unit are not passed through the upper shell 23 and the accumulator vessel 21, when the ends of the inflow pipe 27 and the outflow pipe 28 of the receiver unit are bent into an L-like or V-like shape, and the ends of the pipes are disposed so as not be opposed to each other, the same effects are attained.

### (Embodiment 8)

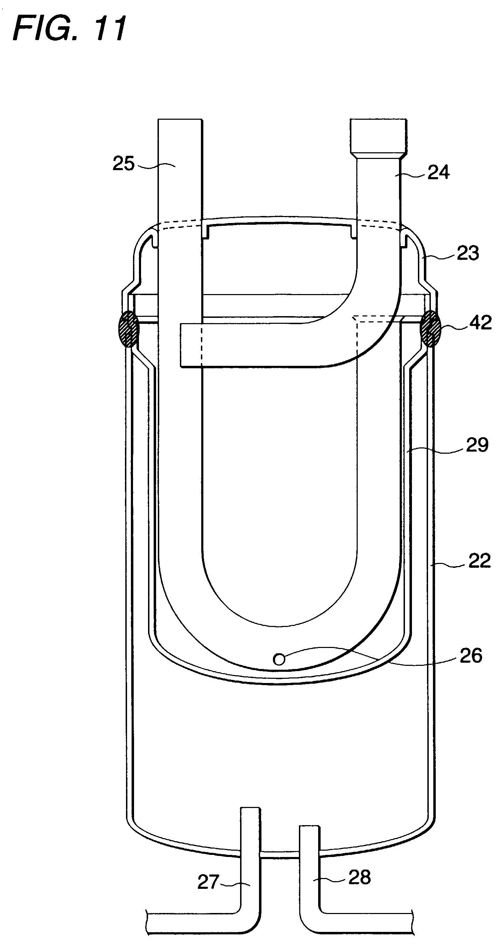

Fig. 11 is a view showing the sectional configuration of an accumulator/receiver which is Embodiment 8 of the invention. In the figure, 29 denotes an accumulator vessel which constitutes an accumulator unit, and which is a pressure vessel that receives an internal pressure (rating: 13 kgf/cm²) and an external pressure (rating: 30 kgf/cm²). An upper end portion of the accumulator vessel 29 is widened so as to be internally in contact with the inner periphery of a receiver vessel 22 constituting a receiver unit. An upper shell 23 is fitted into the widened portion of the accumulator vessel 29. An inflow pipe 24 and a U-like outflow pipe 25 to the accumulator unit are hermetically joined to the upper shell by brazing. The accumulator vessel 29, the receiver vessel 22, and the upper shell 23 are joined together by simultaneously performing MIG welding or the like on three plates from the outer peripheral side, so as to maintain the airtightness. The reference numeral 42 denotes a welded portion in which the three plates are simultaneously welded together by a single welding process. The reference numeral 26 denotes an oil return hole which is disposed in a midway of the U-like outflow pipe 25, and 27 and 28 denote an inflow pipe and an outflow pipe to the receiver unit. These pipes are hermetically joined to the receiver vessel 22 by brazing.

As described above, in the embodiment, since the three plates, or the accumulator vessel 29, the receiver vessel 22, and the upper shell 23 are simultaneously joined together by a single welding process, the welding time can be shortened. Therefore, the productivity can be improved, and hence the production cost can be reduced.

### (Embodiment 9)

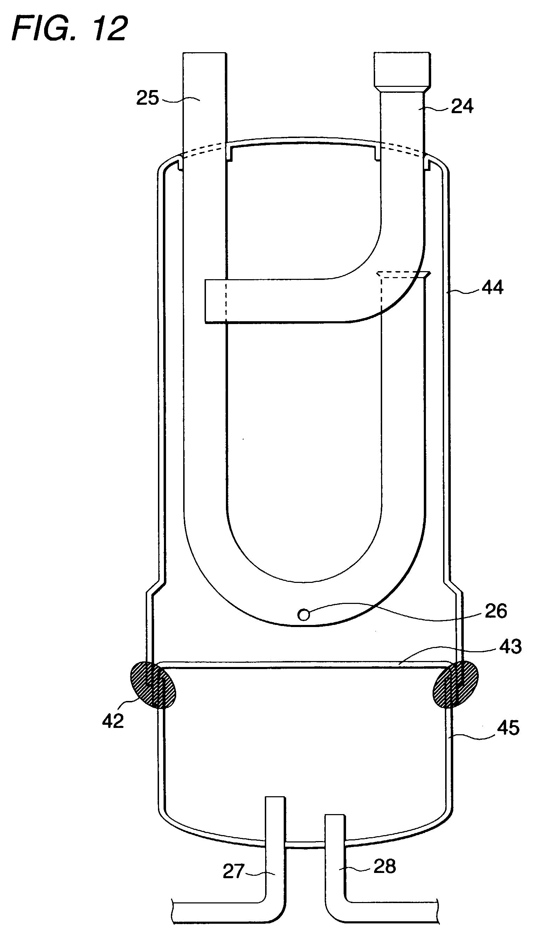

Fig. 12 is a view showing the sectional configuration of an accumulator/receiver which is Embodiment 9 of the invention. In the figure, 44 denotes an accumulator vessel constituting an accumulator unit. A lower end portion of the accumulator vessel 44 is widened so as to be internally in contact with the outer periphery of a partition plate (baffle plate) 43 which separates the accumulator unit and a receiver unit from each other. The partition plate 43 is fitted to the outer periphery of a receiver vessel 45. The partition plate 43 is shaped by press extrusion, and its fitting portion is short. In the same manner as Embodiment 8, the accumulator vessel 44, the receiver vessel 45, and the partition plate 43 are joined together by simultaneously performing MIG welding or the like on three plates from the outer peripheral side, so as to maintain the airtightness.

As described above, in the embodiment, since the partition plate 43 having the short fitting portion is used, the assembling can be easily performed. Since the three plates, or the accumulator vessel 44, the receiver vessel 45, and the partition plate 43 are simultaneously joined together by a single welding process, the assembling time and the welding time can be shortened. Therefore, the productivity can be improved, and hence the production cost can be reduced.

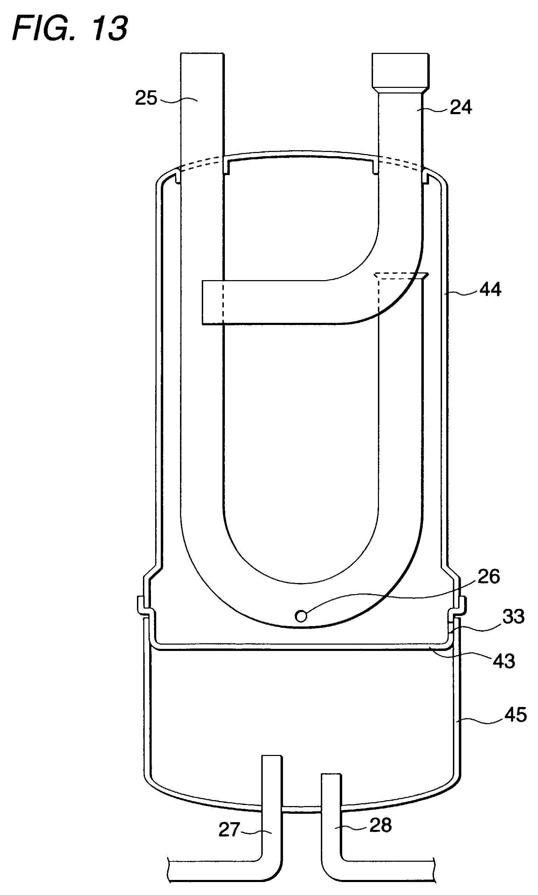

The embodiment which uses the partition plate 43 having the short fitting portion may be modified so that the three plates, or the accumulator vessel 44, the receiver vessel 45, and the partition plate 43 are joined together as shown in Fig. 13.

As described above, the accumulator/receiver according to the first configuration of the invention is an accumulator/receiver in which an accumulator space is placed in a receiver space, and the accumulator/receiver is configured so that an upper end portion of an accumulator vessel constituting the accumulator space is widened to be internally in contact with a receiver vessel constituting the receiver space, and an end plate to which piping (first piping) for an accumulator is connected is joined to an upper end face portion of the accumulator vessel. Therefore, the installation space can be made smaller. Furthermore, the surface area through which heat exchange is performed between the accumulator unit and the receiver unit can be made larger, and hence the efficiency of the refrigeration cycle can be enhanced.

Furthermore, the composition change of the circulating refrigerant can be suppressed to a small degree, thereby attaining an effect that the operating pressure and the performance can be prevented from being varied. Since an excess refrigerant does not stay in the accumulator, the refrigerant sucked into the compressor can be surely gasified, thereby attaining an effect that the efficiency of the compressor is improved and the COP of the refrigeration cycle is enhanced. Since the refrigerant which has entered the receiver is cooled by the refrigerant in the accumulator which is placed in the receiver, the enthalpy difference between the inlet and the outlet of the evaporator is increased, and the inlet pressure of the evaporator is raised, with the result that an effect that the COP of the refrigeration cycle is improved is achieved. Moreover, the installation space can be made smaller, and the efficiency Of the refrigeration cycle can be enhanced.

In the accumulator/receiver according to the second configuration of the invention, fins are disposed on the outer peripheral wall of the accumulator vessel which is placed in the receiver space. Therefore, the surface area through which heat exchange is performed between the accumulator unit and the receiver unit can be made larger, and hence the efficiency of the refrigeration cycle can be made higher.

In the accumulator/receiver according to the third configuration of the invention, a hole through which the receiver space and the accumulator space communicate with each other is formed in a side face portion of the accumulator vessel which is placed in the receiver space. Therefore, the compressor is prevented from being broken by liquid back, and hence the efficiency of the refrigeration cycle can be made further higher.

In the accumulator/receiver according to the fourth configuration of the invention, since the piping (second piping) for the receiver is passed through the accumulator vessel and the end plate, and is connected into the receiver space, the piping for the receiver is passed through the accumulator space the temperature of which is lower. Therefore, the liquid refrigerant flowing out from the piping (outflow pipe) is subcooled and hence the efficiency of the refrigeration cycle can be further enhanced.

In the accumulator/receiver according to the fifth configuration of the invention, the fourth configuration is formed so that, in a portion where the second piping is passed through the accumulator vessel, a predetermined gap is formed between the second piping and the accumulator vessel. Therefore, breakage of the compressor due to liquid back is prevented from occurring, and the efficiency of the refrigeration cycle can be made further higher.

In the accumulator/receiver according to the sixth configuration of the invention, the fourth configuration is formed so that, in portions where the second piping is passed through the accumulator vessel and the end plate, the second piping is hermetically joined to the accumulator vessel and the end plate. Therefore, a phenomenon that the inflow pipe and the outflow pipe for the receiver which are long are resonantly vibrated to cause fatigue failure can be prevented from occurring.

In the accumulator/receiver according to the seventh configuration of the invention, the fourth configuration is formed so that ends of the second piping connected into the receiver space have an L-like or V-like shape, and are disposed so as not to be opposed to each other. Therefore, the refrigerant of the gas phase component which flows into in a two-phase state is prevented from being directly sucked out through the outflow pipe, so that the gas and the liquid are surely distributed in the receiver unit, whereby the efficiency of the air conditioner can be enhanced.

In the accumulator/receiver according to the eighth configuration of the invention, the first configuration is formed so that ends of the second piping are inserted into the receiver space, and the ends have an L-like or V-like shape, and are disposed so as riot to be opposed to each other. Therefore, the gas and the liquid are surely distributed in the receiver unit, whereby the efficiency of the air conditioner can be enhanced.

The accumulator/receiver according to the ninth configuration of the invention is an accumulator/receiver comprising: an accumulator space in which one end is to be connected to a four-way valve of a refrigeration cycle via first piping and another end is to be connected to a compressor of the refrigeration cycle via the first piping; and a receiver space in which one end is to be connected to a condenser of the refrigeration cycle via a second piping and another end is to be connected to an evaporator of the refrigeration cycle via the second piping, the receiver space and the accumulator space being separated from each other by a baffle plate, wherein the baffle plate is fitted to an upper end portion of a receiver vessel constituting the receiver space, and an lower end portion of an accumulator vessel constituting the accumulator space is internally in contact with an outer periphery of the baffle plate. Therefore, the assembling time can be shortened.

In the method of producing an accumulator/receiver according to the invention, an accumulator vessel constituting an accumulator space in which one end is to be connected to a four-way valve of a refrigeration cycle via first piping and another end is to be connected to a compressor of the refrigeration cycle via the first piping is placed in a receiver vessel constituting a receiver space in which one end is to be connected to a condenser of the refrigeration cycle via a second piping and another end is to be connected to an evaporator of the refrigeration cycle via the second piping, an upper end portion of the accumulator vessel is widened to be internally in contact with the receiver vessel, an end plate to which the first piping for an accumulator is connected is fitted to an outer peripheral portion of an upper end face portion of the accumulator vessel, and the three plates, i.e., the accumulator vessel, the receiver vessel, and the end plate are hermetically joined to one another. Therefore, the welding is completed by a single welding process, so that the welding time can be shortened. Consequently, the productivity can be improved, and the production cost can be reduced.

## Claims

1. An accumulator/receiver comprising:
an accumulator space in which one end is to be connected to a four-way valve of a refrigeration cycle via a first piping and another end is to be connected to a compressor of the refrigeration cycle via said first piping; and
a receiver space in which one end is to be connected to a condenser of the refrigeration cycle via a second piping and another end is to be connected to an evaporator of the refrigeration cycle via said second piping, said accumulator space being placed in said receiver space, wherein
an upper end portion of an accumulator vessel constituting said accumulator space is widened to be internally in contact with a receiver vessel constituting said receiver space, and an end plate to which said first piping for an accumulator is connected is joined to an upper end face portion of said accumulator vessel.

2. The accumulator/receiver according to claim 1, wherein
fins are disposed on an outer peripheral wall of said accumulator vessel which is placed in said receiver space.

3. The accumulator/receiver according to claim 1, wherein
a hole through which said receiver space and said accumulator space communicate with each other is formed in a side face portion of said accumulator vessel which is placed in said receiver space.

4. The accumulator/receiver according to claim 1, wherein
said second piping is passed through said accumulator vessel and said end plate, and is connected into said receiver space.

5. The accumulator/receiver according to claim 4, wherein,
in a portion where said second piping is passed through said accumulator vessel, a predetermined gap is formed between said second piping and said accumulator vessel.

6. The accumulator/receiver according to claim 4, wherein,
in portions where said second piping is passed through said accumulator vessel and said end plate, said second piping is hermetically joined to said accumulator vessel and said end plate.

7. The accumulator/receiver according to claim 4, wherein
ends of said second piping connected into said receiver space have an L-like or V-like shape, and are disposed so as not to be opposed to each other.

8. The accumulator/receiver according to claim 1, wherein
ends of said second piping are inserted into said receiver space, and said ends have an L-like or V-like shape, and are disposed so as to avoid being opposed to each other.

9. An accumulator/receiver comprising:
an accumulator space in which one end is to be connected to a four-way valve of a refrigeration cycle via a first piping and another end is to be connected to a compressor of the refrigeration cycle via said first piping; and
a receiver space in which one end is to be connected to a condenser of the refrigeration cycle via a second piping and another end is to be connected to an evaporator of the refrigeration cycle via said second piping, said receiver space and said accumulator space being separated from each other by a baffle plate, wherein
said baffle plate is fitted to an upper end portion of a receiver vessel constituting said receiver space, and an lower end portion of an accumulator vessel constituting said accumulator space is internally in contact with an outer periphery of said baffle plate.

10. A method of producing an accumulator/receiver comprising the steps of:
placing an accumulator vessel constituting an accumulator space in which one end is to be connected to a four-way valve of a refrigeration cycle via a first piping and another end is to be connected to a compressor of the refrigeration cycle via said first piping in a receiver vessel constituting a receiver space in which one end is to be connected to a condenser of the refrigeration cycle via a second piping and another end is to be connected to an evaporator of the refrigeration cycle via said second piping,
widening an upper end portion of said accumulator vessel to be internally in contact with said receiver vessel,
fitting an end plate to which said first piping for an accumulator is connected to an outer peripheral portion of an upper end face portion of said accumulator vessel, and
joining hermetically three plates, i.e., said accumulator vessel, said receiver vessel, and said end plate to one another.
